# FASCICULE DE BREVET EUROPEEN

(11) **EP 1 649 073 B1**
(45) Date de publication et mention de la délivrance du brevet: **08.08.2018**
(21) Numéro de dépôt: 04767740.6
(22) Date de dépôt: 20.07.2004
(51) Int. Cl.: C22F 1/18, C22C 16/00, G21C 21/00

(54) **PROCEDE DE FABRICATION D'UN PRODUIT PLAT EN ALLIAGE DE ZIRCONIUM, PRODUIT PLAT AINSI OBTENU ET ELEMENT D'UN ASSEMBLAGE COMBUSTIBLE POUR REACTEUR DE CENTRALE NUCLEAIRE REALISE A PARTIR DE CE PRODUIT PLAT**
VERFAHREN ZUR HERSTELLUNG EINES FLACHEN ZIRKONIUMLEGIERUNGSPRODUKTS, RESULTIERENDES FLACHES PRODUKT UND AUS DEM FLACHEN PRODUKT HERGESTELLTES BRENNELEMENT FÜR KERNKRAFTANLAGENREAKTOR
METHOD FOR MAKING A FLAT ZIRCONIUM ALLOY PRODUCT, RESULTING FLAT PRODUCT AND FUEL ASSEMBLY COMPONENT FOR NUCLEAR POWER PLANT REACTOR MADE FROM SAID FLAT PRODUCT

(30) Priorité: 31.07.2003 FR 0309474
(43) Date de publication de la demande: 26.04.2006
(73) Titulaire: FRAMATOME, 92400 Courbevoie (FR)
(72) Inventeur: BARBERIS, Pierre, F-73400 UGINE (FR); SIMONOT, Claude, 69003 Lyon (FR)
(74) Mandataire: Lavoix
(86) Numéro de dépôt international: PCT/FR2004/001923
(87) Numéro de publication internationale: WO 2005/021818

(56) Documents cités:
- EP-A- 0 647 724
- EP-A- 0 795 618
- WO-A-97/40659
- FR-A- 2 303 865
- FR-A- 2 673 198
- PATENT ABSTRACTS OF JAPAN vol. 1998, no. 02, 30 janvier 1998 (1998-01-30) & JP 09 257988 A (NUCLEAR FUEL IND LTD), 3 octobre 1997 (1997-10-03)

## Description

L'invention concerne la fabrication de produits plats en alliage de zirconium, à partir desquels on fabrique notamment des pièces utilisées dans les assemblages combustibles pour réacteurs de centrales nucléaires à eau légère.

Les pièces entrant dans la constitution des assemblages combustibles pour réacteurs de centrales nucléaires à eau légère, notamment des réacteurs à eau bouillante, et qui doivent avoir une faible capacité d'absorption des neutrons, sont réalisées en un alliage de zirconium pouvant contenir également, entre autres, des éléments tels que Nb, Sn, Fe, Cr et Ni à des teneurs significatives. Les classes d'alliages dits « Zircaloy 2 » et « Zircaloy 4 » sont principalement utilisées. Le Zircaloy 2 renferme les éléments suivants (les teneurs, comme dans toute la description qui va suivre, sont exprimées en % pondéraux) : Sn = 1,2 - 1,7% ; Fe = 0,07 - 0,20% ; Cr = 0,05 - 0,15% ; Ni = 0,03 - 0,08% ; O = 900 - 1600ppm. Le Zircaloy 4 renferme les mêmes éléments à l'exception du nickel, et la teneur en Fe peut aller de 0,18% à 0,24%. D'autres classes d'alliages de type Zircaloy 2 avec des teneurs en Fe et/ou Cr et/ou Ni plus élevées, ou d'autres alliages renfermant 0,5 à 2% de Sn, 0,5 à 2% de Nb et 0,1 à 0,5% de Fe, ou 0,5 à 2% de Sn, 0,1 à 1% de Fe et 0,1 à 1 ,2% de Cr, ou 1,5 à 3,5% de Nb et 0,5 à 2% de Sn peuvent être utilisés. Ces alliages peuvent également renfermer d'autres éléments d'addition, en plus des impuretés habituelles.

Une pièce particulièrement importante du réacteur qui est réalisée avec de tels alliages est le boîtier dans lequel sont installés les tubes renfermant le combustible. Ce boîtier doit avoir une excellente résistance à la corrosion, et aussi une grande stabilité dimensionnelle sous irradiation. Or, les alliages utilisés le plus usuellement pour former les tôles constituant ces boîtiers présentent des propriétés de croissance sous irradiation qui empêchent d'augmenter le taux de combustion du réacteur autant qu'il serait souhaitable. Cette croissance sous irradiation est directement liée à la texture habituellement fortement anisotrope des produits plats à partir desquels sont fabriqués les boîtiers.

D'autres pièces importantes formées à partir de tels produits plats sont les grilles de réacteurs à eau bouillante ou pressurisée, et les tubes centraux délimitant les chemins de circulation de l'eau.

Les produits plats (tôles ou feuillards) à partir desquels ces pièces sont réalisées doivent également posséder des propriétés mécaniques leur assurant une bonne capacité à être mises en forme.

Des propositions d'amélioration des procédés de fabrication de tôles pour boîtiers sont présentées dans les documents EP-A-0 835 330 et EP-A-0 795 618.

EP-A-0 835 330 propose de préparer la tôle à partir d'un alliage de zirconium contenant des teneurs strictement contrôlées en certaines impuretés volatiles, à savoir entre 0,5 et 10ppm de Cl, de 5 à 20ppm d'au moins un élément choisi parmi Mg, Ca, Na et K, de 100 à 270ppm de C, de 50 à 120ppm de Si et de 1 à 30ppm de P. Après les opérations habituelles d'obtention de la tôle de départ, qui comportent notamment une trempe β lorsque la tôle est à son épaisseur finale ou quasi-finale, on pratique après la trempe β un traitement thermique de recuit entre 600 et 800°C dans un four statique ou entre 700 et 800°C dans un four continu. Après quoi, les opérations de pliage de la tôle en vue de la fabrication du boîtier sont effectuées. Grâce notamment à la teneur des impuretés volatiles citées et aux conditions de la trempe β, on obtient après la trempe β une structure aciculaire du type dit « basket weave » (à motif en vannerie), que le traitement thermique ultérieur veille à ne pas supprimer. On obtient ainsi une tôle présentant une bonne ductilité et une faible propension à se fissurer lors des opérations de formage, sans que les propriétés de résistance à la corrosion soient détériorées.

EP-A-0 795 618 décrit des tôles en alliage de zirconium à faible croissance sous irradiation, ne contenant pas plus de 5% de Sn et et/ou pas plus de 5% de Nb et pas moins de 90% de Zr, ayant une orientation cristalline <0001> en sens long FL de 0,2 à 0,35, et ayant une différence ΔFL des valeurs de FL entre le milieu dans le sens de la largeur et l'extrémité dans le sens de la largeur de la tôle inférieure ou égale à 0,025. Ces tôles sont obtenues à la suite d'une trempe β, au cours de laquelle on minimise autant que possible les différences de température entre les faces de la tôle lors de la phase de chauffage de la trempe β. Ces tôles ont donc des orientations cristallines particulières isotropes produisant des effets de croissance réduite sous irradiation. JP09257988 décrit un type d'alliage de Zr pour matériaux de structure de coeur de réacteur selon lequel on durcit par trempe β, lamine et recuit un alliage dont la composition est Zr, 0,8-1,2% Sn, 0,17-0,28% Fe, 0,05-0,15% Cr, 0,04-0,1% Ni, 0,01-0,09% Nb, 1000-1500 ppm O, Si≤120 ppm. Le matériau de structure présentant une bonne résistance à l'hydruration et une bonne résistance à la corrosion. Toutefois, il s'avère que ces procédés ne permettent pas de parvenir à des produits plats possédant d'excellentes propriétés de déformabilité, du point de vue du pliage et de l'emboutissage. Ces propriétés sont pourtant essentielles pour l'obtention aisée de boîtiers dans des conditions optimales.

Le but de l'invention est de proposer un procédé de fabrication de produits plats en alliage de zirconium présentant à la fois de bonnes propriétés mécaniques et une faible croissance sous irradiation, de sorte que ces produits plats puissent être utilisés de manière optimale notamment, mais pas exclusivement, pour la fabrication de boîtiers de réacteurs nucléaires à eau bouillante.

A cet effet, l'invention a pour objet un procédé de fabrication d'un produit plat en alliage de zirconium, caractérisé en ce que :
- on élabore et on coule un lingot d'alliage de zirconium contenant au moins 95% en poids de zirconium, comportant les éléments d'alliage et les impuretés habituels ;
- on met en forme ledit lingot pour obtenir un produit plat ;
- on soumet ledit produit plat à une opération de trempe β, dont les conditions sont déterminées en vue de l'obtention au sein du produit plat d'une structure aciculaire à l'issue de ladite trempe β ;
- on soumet ledit produit plat, après la trempe β, à une opération de laminage effectuée en une seule séquence de laminage sans recuit intermédiaire, ledit laminage étant effectué à une température comprise entre la température ambiante et 200°C, avec un taux de réduction compris entre 2 et 20% ;
- et on soumet ledit produit plat laminé à un traitement de recuit dans le domaine α ou α + β effectué entre 500 et 800°C pendant 2 minutes à 10 heures.

Les teneurs pondérales des principaux éléments d'alliage peuvent être Sn = 1,2 - 1,7% ; Fe = 0,07 - 0,20% ; Cr = 0,05 - 0,15% ; Ni = 0,03 - 0,08% ; O = 900 - 1600ppm.

Les teneurs pondérales des principaux éléments d'alliage peuvent être Sn = 1,2 - 1,7%; Fe = 0,18 - 0,24% ; Cr = 0,05 - 0,15% ; O = 900 - 1600ppm.

Les teneurs pondérales des principaux éléments d'alliage peuvent être Sn = 0,5 - 2% ; Nb = 0,5 - 2% ; Fe = 0,1 - 0,5%.

Les teneurs pondérales des principaux éléments d'alliage peuvent être Sn = 0,5 - 2% ; Fe = 0,1 - 1% ; Cr = 0,1 - 1,2%.

Les teneurs pondérales des principaux éléments d'alliage peuvent être Nb = 1,5 - 3,5%; Sn = 0,5 - 2%.

Le laminage suivant la trempe β est effectué de préférence avec un taux de réduction de 5 à 16%, de préférence de 5 à 10%.

De préférence, le refroidissement de la trempe β est effectué à une vitesse d'au moins 1°C/s.

L'invention concerne également un produit plat en alliage de zirconium, caractérisé en ce qu'il est obtenu par le procédé précédent.

L'invention concerne également un élément d'un assemblage combustible pour réacteur de centrale nucléaire à eau légère, caractérisé en ce qu'il est obtenu par mise en forme d'un produit plat du type précédent.

Il peut consister en un boîtier de réacteur nucléaire à eau bouillante.

Il peut consister en une grille de réacteur à eau bouillante.

Il peut consister en une grille de réacteur à eau pressurisée.

Il peut consister en un tube central délimitant les chemins de circulation de l'eau.

Comme on l'aura compris, l'invention consiste en un procédé de fabrication d'un produit plat en alliage de zirconium adapté à l'obtention d'une structure intermédiaire partiellement recristallisée mixte, équiaxe et aciculaire, comportant une étape de laminage à froid (ou à température modérément élevée), placée entre une trempe β et un recuit effectué dans le domaine α ou le domaine α + β.

Dans le procédé de EP-A-0 835 330, la structure brute de trempe β est généralement une structure grossière à gros grains ex-β de 50 à 500µm. Ils sont peu orientés, leur texture est très marquée, avec des pics des figures de pôles très hauts, une bonne isotropie des propriétés, et des orientations cristallines privilégiées. Il apparaît que c'est cette microstructure en gros grains ex-β à texture très marquée qui est à l'origine des difficultés de mise en forme des tôles. Le recuit α ou α + β n'a aucune influence sur cette microstructure.

Les inventeurs ont imaginé qu'un arrangement des cristaux plus aléatoire et moins marqué pourrait conduire à une isotropie comparable des propriétés mécaniques, donc conserver de bonnes propriétés en termes de croissance sous irradiation, tout en s'avérant avantageux quant aux propriétés mécaniques.

Ils ont obtenu une telle structure grâce au laminage à froid ou à température modérément élevée précédant le recuit α ou α + β, laminage qui casse la structure aciculaire et les grains présents après la trempe β, et permet ainsi d'adoucir la texture, la rendant moins marquée, avec des pics moins hauts, avec une isotropie des propriétés qui peut être légèrement plus faible, mais avec des orientations plus aléatoires. Le recuit α ou α + β qui suit génère une recristallisation qui conduit à une texture à isotropie seulement faiblement dégradée, mais avec une microstructure montrant un mélange de grains équiaxes et d'aiguilles. Cette microstructure est affinée, ce qui est favorable à la déformabilité du matériau.

Il s'avère également que la rugosité du produit plat est divisée par 2, ce qui améliore les performances thermohydrauliques des produits finis, ainsi que les propriétés d'emboutissage.

Selon l'invention, le laminage à froid a lieu entre la température ambiante et 200°C. Il est effectué avec un taux de réduction de 2 à 20% (de préférence entre 5 et 15%, mieux entre 5 et 10%). Ce taux de réduction peut être obtenu en une ou plusieurs passes de laminage, mais obligatoirement en une seule séquence de laminage, c'est à dire sans recuit intermédiaire entre les différentes passes. Un ou des recuits intermédiaires gêneraient ou empêcheraient la recristallisation lors du recuit α ou α + β.

Le recuit effectué après le laminage à froid selon l'invention est effectué à une température de 500 à 800°C, c'est à dire soit dans le domaine α, soit dans le domaine α + β de l'alliage. Les températures les plus basses de cette gamme sont particulièrement adaptées au cas des alliages à teneur élevée en Nb (supérieure à 0,3% environ). La durée du recuit dépend du niveau de déformation subi par le produit lors du laminage et du type de l'installation de recuit (qui peut être continue ou statique).

L'invention sera mieux comprise à l'aide de la description qui suit, donnée en référence aux figures annexées suivantes :
- la figure 1 qui montre un exemple de structure métallurgique en lumière polarisée d'un échantillon d'alliage de zirconium après trempe β ;
- la figure 2 qui montre de la même façon cet échantillon après laminage à froid ;
- la figure 3 qui montre de la même façon cet échantillon après laminage à froid et recuit, ayant donc subi toutes les étapes du procédé selon l'invention ;
- la figure 4 qui montre des figures de pôles d'un échantillon à l'état brut de trempe β (fig. 4a), et après un laminage à froid à 16% de taux de réduction et un recuit (fig. 4b).
- la figure 5 qui montre des exemples de structure métallurgique en lumière polarisée d'échantillons d'alliage de zirconium après recuit final, un des échantillons ayant subi deux laminages à froid et un recuit intermédiaire (fig.5a), l'autre n'ayant subi qu'une laminage à froid selon l'invention (fig.5b) ;
- la figure 6 qui montre des figures de pôles de ces deux échantillons (fig.6a et 6b respectivement).

Pour mettre en oeuvre l'invention, on commence par élaborer un produit plat en alliage de zirconium par des étapes classiques de fusion d'un lingot, généralement forgeage du lingot, laminage à chaud, le cas échéant en plusieurs passes éventuellement séparées par des traitements thermiques, généralement laminage(s) à froid et recuit(s), et enfin trempe β du matériau obtenu ; puis selon l'invention on exécute un laminage à froid et un recuit.

La composition de l'alliage peut correspondre, pour ses principaux éléments, à toutes sortes de classes d'alliages de zirconium habituellement utilisés pour fabriquer des éléments d'assemblage combustibles pour réacteurs nucléaires, en particulier des boîtiers de réacteurs à eau bouillante. Des exemples de telles classes ont été définis dans le préambule de la description. De manière générale, l'invention est applicable aux alliages de zirconium renfermant au moins 95% de zirconium. En deçà de 95%, il y a un risque élevé de ne pas obtenir les structures et les propriétés recherchées.

Pour toutes ces classes d'alliages, la trempe β a pour résultat l'obtention d'une structure aciculaire. Selon, en particulier, le niveau des impuretés présentes, cette structure peut présenter un caractère de vannerie plus ou moins marqué. Mais un tel caractère n'est pas particulièrement recherché dans le procédé selon l'invention, puisque de toute façon le laminage à froid qui va suivre modifie considérablement la structure en cassant la structure aciculaire.

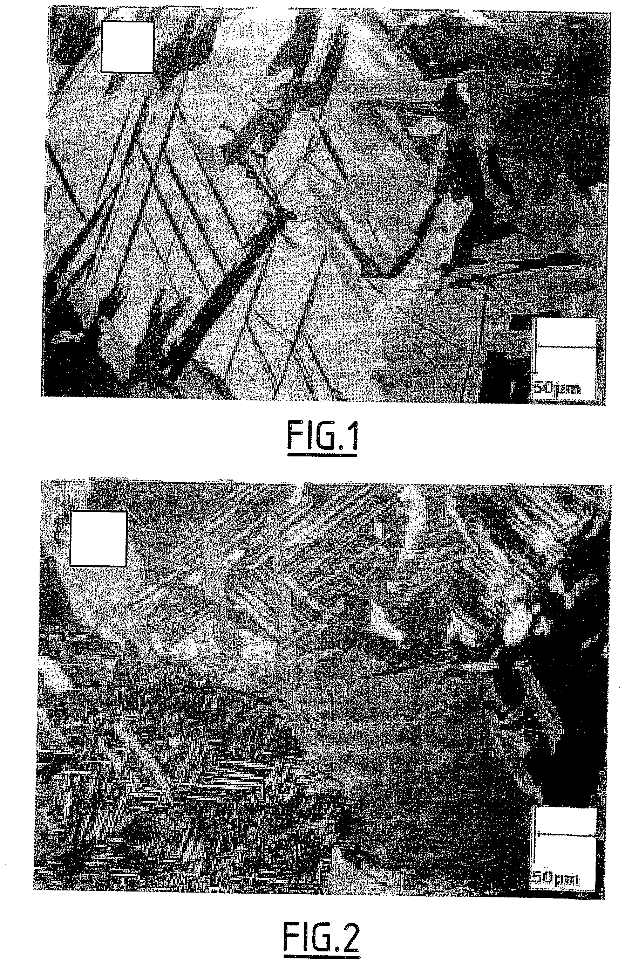

La figure 1 montre la microstructure d'un échantillon de Zircaloy 4 de composition Sn = 1,44% , Fe = 0,21%, Cr = 0,11%, O = 0,12%, Si = 40ppm, le reste étant du Zr et les impuretés habituelles, obtenu à partir d'un lingot de 660mm de diamètre ayant subi des traitements de mise en forme classiques (forgeage à 100mm d'épaisseur, laminage à chaud à 5mm d'épaisseur, recuit et plusieurs cycles de laminage à froid-recuit, qui lui ont conféré une épaisseur de 2,50mm, ainsi qu'une trempe β effectuée par chauffage infra-rouges à une température maximale de 1110°C, maintien en phase β pendant 93s et refroidissement à 2-5°C/s jusqu'à la température ambiante.

On voit que cette microstructure est typique d'un état suivant une trempe β, avec un mélange de platelets parallèles et de vannerie. Dans l'exemple représenté, on observe aussi de nombreuses macles, mais cela peut provenir du processus de préparation de l'échantillon, ou du bobinage qui a suivi la trempe β.

Le figure 2 montre l'échantillon de ce même métal trempé β, après qu'il a subi un laminage à froid selon l'invention effectué à température ambiante et avec un taux de réduction de 12% en une passe. Ce laminage à froid à permis de casser les aiguilles de la structure initiale et a augmenté le nombre de macles.

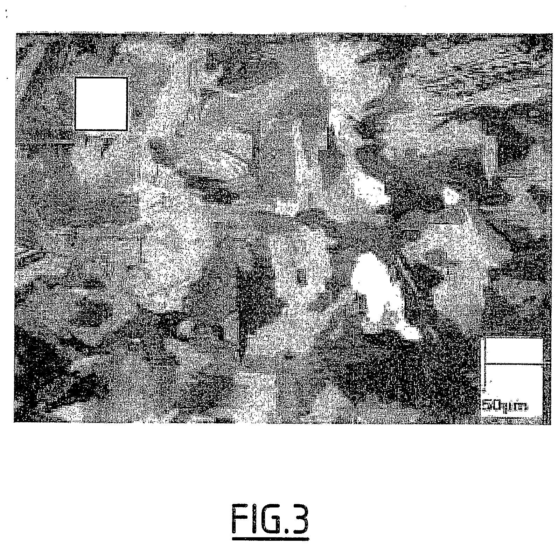

La figure 3 montre un échantillon de ce même métal trempé β, laminé à froid à 12% et recuit à 700°C pendant 1h (recuit α). Il y a eu recristallisation partielle et augmentation du nombre de grains équiaxes (augmentation qui est d'autant plus forte que le taux de réduction est élevé), ainsi qu'une disparition des macles.

Le tableau 1 montre les facteurs de Kearns FR, FT et FL mesurés à la suite d'analyses des textures des différents échantillons à l'état suivant la trempe β, suivant le laminage à froid (LAF) et suivant le recuit α :

**Tableau 1**

| Etat métallurgique | Taux de réduction au LAF(%) | FR | FT | FL |
|---|---|---|---|---|
| après trempe β | 0 | 0.319 | 0.335 | 0.346 |
| Après LAF | 5 | 0.367 | 0.317 | 0.316 |
| | 8 | 0.415 | 0.315 | 0.27 |
| | 12 | 0.475 | 0.293 | 0.232 |
| | 16 | 0.471 | 0.322 | 0.207 |
| Après LAF et recuit α | 5 | 0.444 | 0.297 | 0.259 |
| | 8 | 0.424 | 0.314 | 0.262 |
| | 12 | 0.478 | 0.332 | 0.19 |
| | 16 | 0.499 | 0.317 | 0.184 |

On constate que dans cet exemple, l'isotropie de l'échantillon, qui était quasi-parfaite après la trempe β, n'a été que relativement peu dégradée par le laminage à froid et le recuit α qui ont suivi.

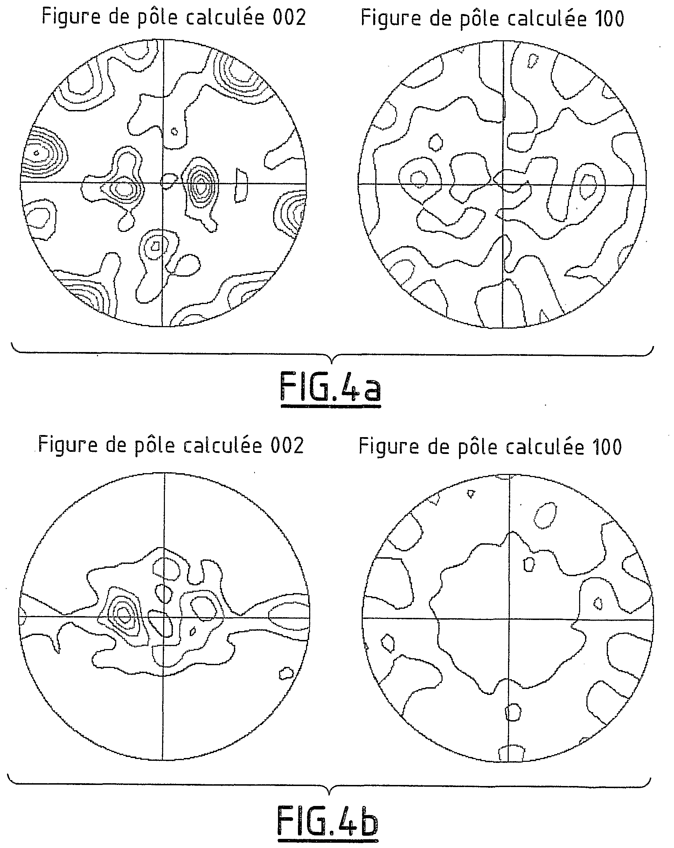

Les figures de pôles de ces échantillons montrent quelques pôles accusés, dont deux dans le plan normal-transversal à environ 30° de la direction normale qui ne disparaissent pas quels que soient le taux de réduction du laminage à froid et les conditions de recuit. En revanche, il y a une diminution significative des pôles sur l'axe C à 90° de la direction normale dès les taux de réduction relativement faibles de 2%, et une disparition totale de ces pôles dès 5% de taux de réduction. La figure 4 montre de telles figures de pôles, obtenues sur les échantillons à l'état suivant la trempe β (figure 4a) et à l'état laminé à froid avec un taux de réduction de 16% et recuit (figure 4b).

La structure des échantillons selon l'invention présente des orientations plus aléatoires que dans l'art antérieur.

Au-delà de 20% de taux de réduction, l'isotropie est trop dégradée. Pour assurer une isotropie satisfaisante dans tous les cas, il est conseillé de ne pas dépasser des taux de réduction de 16%.

Du point de vue des propriétés mécaniques, on a effectué des comparaisons entre :
- un échantillon A conforme à l'art antérieur en ce que :
   - sa composition était Sn = 1,33% ; Fe = 0,16% ; Cr = 0,10% ; Ni = 0,065% ; O = 0,12%, le reste étant du Zr et les impuretés habituelles ;
   - il a subi, après une trempe β, un recuit α à 750°C pendant 3 minutes ; et
- un échantillon B élaboré par le procédé selon l'invention, en ce que :
   - sa composition était la même que celle de l'échantillon A
   - il a subi une trempe β, un laminage à froid à température ambiante avec un taux de réduction de 10%, puis un recuit α à 750°C pendant 3 minutes.

Des tests de caractérisation mécanique ont été pratiqués à température ambiante, et leurs résultats sont regroupés dans le tableau 2.

**Tableau 2**

| | | Echantillon A (référence) | Echantillon B (invention) |
|---|---|---|---|
| Résistance à la traction (MPa) | Sens long | 520,7 | 518,0 |
| | Sens travers | 522,3 | 528,3 |
| Limite d'élasticité conventionnelle 0,2% (MPa) | Sens long | 394,0 | 408,7 |
| | Sens travers | 411,3 | 445,0 |
| Allongement à la rupture (%) | Sens long | 24,0 | 24,3 |
| | Sens travers | 22,1 | 23,0 |
| Rugosité Ra (µm) | Sens long | 0,45 | 0,21 |
| | Sens travers | 0,46 | 0,19 |

Il ressort de ces résultats que dans le cas de l'utilisation de l'invention, la résistance à la traction en sens travers augmente en même temps que l'allongement à la rupture, alors que l'on observe habituellement une variation inverse de ces deux grandeurs. Par ailleurs, la résistance à la traction en sens long n'est pas affectée de façon réellement significative par le traitement selon l'invention.

L'invention a également permis une diminution de moitié de la rugosité de l'échantillon.

On note également que la capacité de pliage pour le rayon 3e n'est pas détériorée par le traitement selon l'invention.

D'autres essais ont consisté à préparer des échantillons de composition Sn = 1,46% ; Fe = 0,21% ; Cr = 0,10% ; O = 0,11%, le reste étant du zirconium et des impuretés habituelles, et à leur faire subir les traitements suivants :
- laminage à chaud sous forme d'une tôle de 5,6mm d'épaisseur ;
- recuit sous vide à 700°C pendant 2 heures ;
- laminage à froid à 50% de taux de réduction ;
- trempe β par chauffage sous vide ou en bain de sel à 1030°C suivi soit par un refroidissement relativement lent à l'argon à une vitesse d'environ 4°C/min effectué dans un four statique, soit par une trempe rapide à l'eau, donc à une vitesse supérieure à 100°C/s ;
- laminage à froid en une seule séquence sans recuit intermédiaire avec un taux de réduction jusqu'à 30% selon les essais ;
- recuit sous vide de durée 2h à 600°C.

A la suite de ces essais on peut observer les phénomènes suivants.

Un taux de réduction de plus de 20% est susceptible de faire apparaître des criques superficielles, si le refroidissement de la trempe β a été lent.

Les structures obtenues sont, pour les deux modes considérés de refroidissement lors de la trempe β, d'autant plus hétérogènes que le taux de réduction du laminage à froid est élevé. Les échantillons ayant été refroidis rapidement présentent des grains recristallisés plus gros que ceux des échantillons refroidis plus lentement.

Concernant les facteurs de Kearns mesurés sur les divers échantillons (brut de trempe ou après recuit), les résultats sont regroupés dans le tableau 3, où on a également indiqué le rapport R/e mesuré lors d'essais de pliage :

**Tableau 3**

| Etat métallurgique | Taux de réduction au LAF (%) | FR | FT | FL | R/e |
|---|---|---|---|---|---|
| Après trempe β par chauffage sous vide et refroidissement à l'argon | 0 (brut de trempe) | 0,429 | 0,287 | 0,284 | 2,55-2,8 |
| | 6,2 | 0,498 | 0,287 | 0,215 | 2,45-2,75 |
| | 10,4 | 0,548 | 0,257 | 0,195 | 2,85-3,15 |
| | 15,4 | 0,493 | 0,303 | 0,204 | 3,55-4,1 |
| | 20,8 | 0,445 | 0,382 | 0,174 | 3,6-4,2 |
| | 29,3 | 0,604 | 0,260 | 0,136 | 3-3,5 |
| Après trempe β par chauffage en bain de sel et refroidissement à l'eau | 0 (brut de trempe) | 0,352 | 0,324 | 0,324 | 2,17-2,36 |
| | 5,9 | 0,371 | 0,336 | 0,294 | 2,04-2,24 |
| | 8,9 | 0,425 | 0,352 | 0,222 | 1,91-2,02 |
| | 13,7 | 0,338 | 0,193 | 0,193 | 0,92-1,06 |
| | 20,5 | 0,474 | 0,373 | 0,153 | 1,10-1,20 |
| | 27,1 | 0,437 | 0,415 | 0,148 | 0,78-0,91 |

On constate que, pour les deux types de trempe, le facteur FL évolue de façon similaire, à savoir qu'il traduit une isotropie se dégradant progressivement lorsque le taux de réduction du laminage à froid augmente. Au-delà de 20%, on considère qu'elle n'est plus satisfaisante, et il est préférable, pour assurer dans tous les cas une isotropie correcte, de ne pas dépasser 16%, ou encore mieux 10%. Dans le même temps, les facteurs FR et FT évoluent de manière aléatoire.

On a également pu constater que la résistance à la corrosion nodulaire à 500°C des échantillons n'était pas influencée par le taux de réduction du laminage à froid. En revanche, elle est significativement influencée par le mode de refroidissement pratiqué lors de la trempe β. Les échantillons ayant subi une vitesse de refroidissement élevée (trempe à l'eau) présentent un gain de masse de l'ordre de 50mg/dm², contre environ 175 mg/dm² pour les échantillons ayant subi un refroidissement lent (à l'argon). De ce point de vue, un refroidissement rapide est donc avantageux.

On a également réalisé des essais de pliage des échantillons. Un faible rapport entre R (rayon de courbure à l'apparition de criques) et e (épaisseur de l'échantillon) est l'indice d'une bonne capacité au pliage. De ce point de vue, les échantillons ayant subi un refroidissement rapide lors de la trempe β sont les meilleurs, et leur capacité au pliage augmente avec le taux de réduction au laminage à froid. Les échantillons ayant subi un refroidissement lent lors de la trempe β sont moins satisfaisants et une augmentation du taux de réduction au laminage à froid tend à dégrader leur capacité au pliage.

Cette influence contradictoire du taux de réduction sur la capacité au pliage pour les deux modes de refroidissement pourrait être due aux différences structurales obtenues par ces deux modes. Le refroidissement lent procure des petits grains équiaxes dans une matrice d'aiguilles grossières, alors que le refroidissement rapide procure des gros grains équiaxes dans une matrice d'aiguilles fines, ce qui est plus favorable à une déformation facile de la tôle.

Les effets positifs d'un refroidissement rapide par rapport au refroidissement lent de 4°C/min de l'exemple commencent à être sensibles pour des vitesses de refroidissement de 1°C/s qui sont aisément accessibles industriellement, notamment par un refroidissement à l'argon effectué au défilé par convection forcée, lorsque la tôle sort d'une zone de chauffe.

Par ailleurs, on a réalisé des essais montrant que le laminage à froid suivant la trempe β doit, selon l'invention, être réalisé en une seule séquence, c'est-à-dire sans recuit intermédiaire.

Une tôle de composition identique à celle des échantillons A et B précédemment cités laminée à chaud puis à froid jusqu'à une épaisseur de 2,56mm a subi une trempe β par chauffage à 1100°C en 93s et refroidie à une vitesse de 3,6°C/s à l'argon. Puis un échantillon de référence a subi un premier laminage à froid à un taux de réduction de 8%, un recuit intermédiaire de 1h à 700°C, un deuxième laminage à froid à un taux de réduction de 4% et un recuit final à 700°C pendant 1h. Un échantillon de cette même tôle a, lui, subi selon l'invention un unique laminage à froid à un taux de réduction de 12%, pour aboutir en une seule séquence à un produit d'épaisseur quasiment identique au produit de référence. Ce produit a ensuite, lui aussi, été recuit à 700°C pendant 1h.

On peut constater que le produit de référence, après recuit final, présente une moins bonne planéité que le produit élaboré selon l'invention. De ce point de vue, la passe de laminage à faible taux de réduction (moins de 5%) a été dommageable. De manière générale, dans le cadre de l'invention il peut être préférable, pour obtenir une bonne planéité, que la première passe de laminage à froid soit effectuée avec un taux de réduction d'au moins 5%.

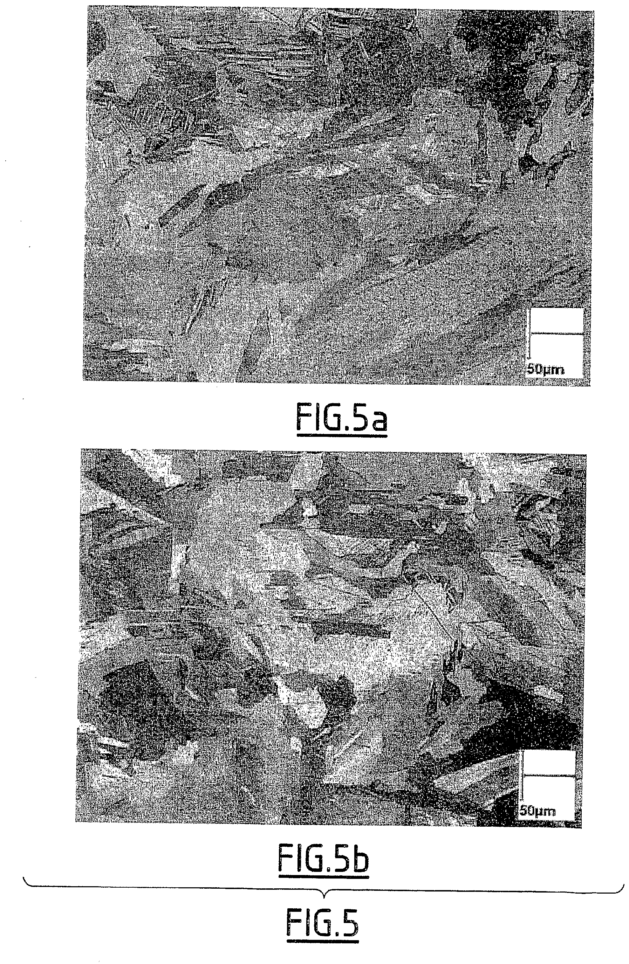

La figure 5a montre une micrographie en lumière polarisée de l'échantillon de référence après recuit final. Sa structure est encore aciculaire avec peu de zones suffisamment déformées pour recristalliser, et il y subsiste de grandes plages de platelets parallèles.

La figure 5b montre dans les mêmes conditions l'échantillon selon l'invention après recuit final. On y trouve des zones recristallisées, et pas de plages de platelets parallèles. Ce traitement sans recuit intermédiaire selon l'invention s'est donc montré plus apte à casser la structure aciculaire obtenue après la trempe β.

Les facteurs de Kearns des échantillons après recuit final sont exposés dans le tableau 4.

**Tableau 4**

| | FR | FT | FL |
|---|---|---|---|
| Référence | 0,458 | 0,341 | 0,201 |
| Invention | 0,450 | 0,348 | 0,202 |

On n'observe pas, de ce point de vue, de différences significatives entre les deux échantillons, et ces résultats sont en bon accord avec ceux précédemment présentés.

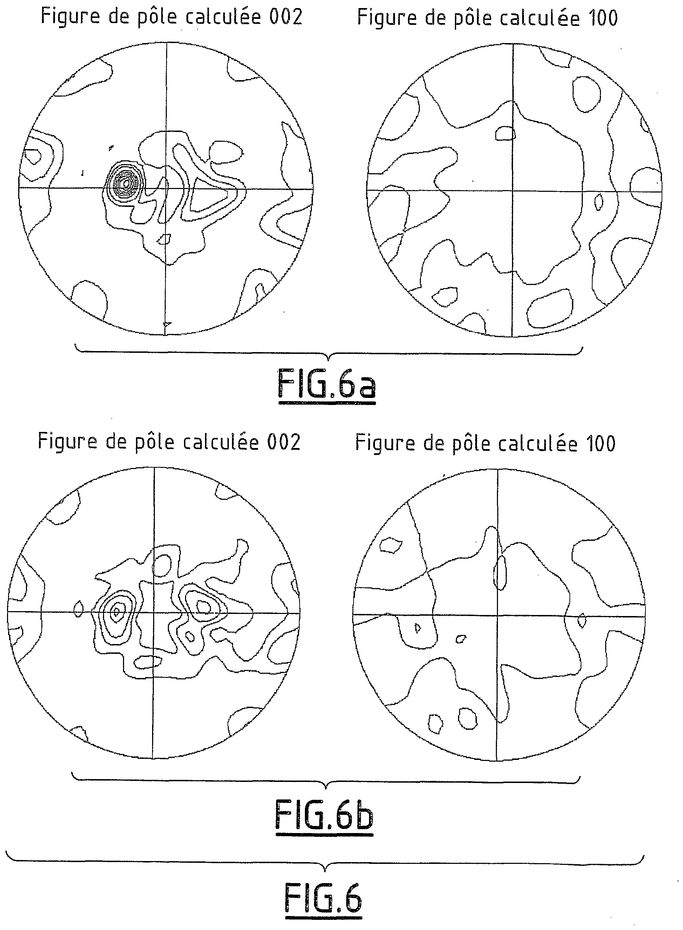

La figure 6 montre les figures de pôles calculées 002 et 100 après recuit final pour l'échantillon de référence (figure 6a) et l'échantillon selon l'invention (figure 6b). Les textures de ces échantillons sont intermédiaires entre un état trempé et un état recristallisé classique, avec un ou deux pôles très fins et très intenses dans le plan normal-transversal à environ 30° de la direction normale. Il y a également des pôles près de la direction transversale et dans le plan longitudinal-transversal. L'échantillon de référence présente une forte asymétrie, et des textures beaucoup plus intenses que l'échantillon selon l'invention. Ces caractéristiques sont défavorables à l'isotropie et à l'emboutissabilité du matériau. Pour obtenir des produits satisfaisants du point de vue de leurs propriétés mécaniques, il faut donc éviter de procéder à un ou des recuits intermédiaires entre deux passes du laminage à froid suivant la trempe β. Mais un laminage à froid en plusieurs passes sans recuits intermédiaires dont le taux de réduction total demeurerait inférieur ou égal à 20% est possible.

Une possible explication du caractère défavorable des recuits intermédiaires est la suivante. Si on déforme de quelques % un matériau trempé à structure aciculaire, toutes les aiguilles constituant les grains ne sont pas déformées, mais seulement celles qui sont les plus favorablement orientées par rapport à la déformation appliquée. Si on recuit le matériau, ces grains déformés vont être restaurés ou recristallisés, donc redevenir plus déformables. Et lors d'une déformation ultérieure, ils risquent de se déformer préférentiellement et d'empêcher les autres aiguilles de se briser, ce qui gêne donc l'affinement de la structure recherché dans l'invention.

En revanche, si après le premier laminage à froid on effectue un laminage à froid supplémentaire sans recuit intermédiaire, cela permet de briser des aiguilles qui n'avaient pas été affectées par le premier laminage, d'autant plus que les aiguilles déformées lors du premier laminage ont été durcies et sont donc devenues moins déformables.

L'affinement de la structure recherché peut donc être obtenu, à taux de réduction égal, soit par un laminage à froid unique qui va d'emblée briser un relativement grand nombre d'aiguilles, soit par une succession de laminages à froid sans recuits intermédiaire qui briseront plus ou moins précocément les aiguilles selon leurs orientations.

Globalement, les propriétés mécaniques de produits plats (tôles ou feuillards) obtenus par le procédé selon l'invention leur confèrent une meilleure déformabilité et emboutissabilité que les produits plats de l'art antérieur. Ils sont ainsi mieux adaptés, notamment, à la fabrication par différents procédés de formage de pièces entrant dans la composition des assemblages combustibles pour réacteurs de centrales nucléaires, puisque par ailleurs, leur isotropie n'est que peu ou pas dégradée par rapport aux produits plats de l'art antérieur.

Une application privilégiée de l'invention est la réalisation de boîtiers pour réacteurs à eau bouillante. Les grilles et tubes centraux peuvent également avantageusement être obtenus à partir de produits plats élaborés par le procédé selon l'invention.

## Revendications

1. Procédé de fabrication d'un produit plat en alliage de zirconium, **caractérisé en ce que** :
- on élabore et on coule un lingot d'alliage de zirconium contenant au moins 95% en poids de zirconium, comportant les éléments d'alliage et les impuretés habituels
- on met en forme ledit lingot pour obtenir un produit plat ;
- on soumet ledit produit plat à une opération de trempe β, le refroidissement de la trempe β étant effectué à une vitesse d'au moins 1°C/s ;
- on soumet ledit produit plat, après la trempe β, à une opération de laminage effectuée en une seule séquence de laminage sans recuit intermédiaire, ledit laminage étant effectué à une température comprise entre la température ambiante et 200°C, avec un taux de réduction compris entre 2 et 20% ;
- et on soumet ledit produit plat laminé à un traitement de recuit dans le domaine α ou α + β effectué entre 500 et 800°C pendant 2 minutes à 10 heures.

2. Procédé selon la revendication 1, **caractérisé en ce que** ses teneurs pondérales en éléments d'alliage sont Sn = 1,2 - 1,7% ; Fe = 0,07 - 0,20% ; Cr = 0,05 - 0,15% ; Ni = 0,03 - 0,08% ; O = 900 - 1600ppm.

3. Procédé selon la revendication 1, **caractérisé en ce que** ses teneurs pondérales en éléments d'alliage sont Sn = 1,2 - 1,7% ; Fe = 0,18 - 0,24% ; Cr = 0,05 - 0,15% ; O = 900 - 1600ppm.

4. Procédé selon la revendication 1, **caractérisé en ce que** ses teneurs pondérales en éléments d'alliage sont Sn = 0,5 - 2% ; Nb = 0,5 - 2% ; Fe = 0,1 - 0,5% .

5. Procédé selon la revendication 1, **caractérisé en ce que** ses teneurs pondérales en éléments d'alliage sont Sn = 0,5 - 2% ; Fe = 0,1 -1 % ; Cr = 0,1 - 1,2%.

6. Procédé selon la revendication 1, **caractérisé en ce que** ses teneurs pondérales en éléments d'alliage sont Nb = 1,5 - 3,5% ; Sn = 0,5 - 2%.

7. Procédé selon l'une des revendications 1 à 6, **caractérisé en ce que** le laminage suivant la trempe β est effectué avec un taux de réduction de 5 à 16%.

8. Procédé selon la revendication 7, **caractérisé en ce que** le laminage suivant la trempe β est effectué avec un taux de réduction de 5 à 10%.

9. Produit plat en alliage de zirconium, **caractérisée en ce qu'**il est obtenu par le procédé suivant l'une des revendications 1 à 8.

10. Elément d'un assemblage combustible pour réacteur de centrale nucléaire à eau légère, **caractérisé en ce qu'**il est obtenu par mise en forme d'un produit plat selon la revendication 9.

11. Elément d'un assemblage combustible pour réacteur de centrale nucléaire selon la revendication 10, **caractérisé en ce qu'**il consiste en un boîtier de réacteur nucléaire à eau bouillante.

12. Elément d'un assemblage combustible pour réacteur de centrale nucléaire selon la revendication 10, **caractérisé en ce qu'**il consiste en une grille de réacteur à eau bouillante.

13. Elément d'un assemblage combustible pour réacteur de centrale nucléaire selon la revendication 10, **caractérisé en ce qu'**il consiste en une grille de réacteur à eau pressurisée.

14. Elément d'un assemblage combustible pour réacteur de centrale nucléaire selon la revendication 10, **caractérisé en ce qu'**il consiste en un tube central délimitant les chemins de circulation de l'eau.

## Patentansprüche

1. Verfahren zur Herstellung eines Flächenprodukts aus einer Zirkoniumlegierung, **dadurch gekennzeichnet, dass**:
- ein Block aus einer mindestens 95 Gew.-% an Zirkonium enthaltenden Zirkoniumlegierung, der die Legierungselemente und übliche Verunreinigungen umfasst, erstellen oder gegossen wird;
- der Blocks geformt wird, um ein Flächenprodukt zu erhalten;
- das Flächenprodukts einem Vorgang der Härtung β unterzogen wird, wobei die Abkühlung der Härtung β bei einer Geschwindigkeit von mindestens 1°C/s durchgeführt wird;
- das Flächenprodukts nach der Härtung einem Walzvorgang unterzogen wird, der bei einer einzigen Walzsequenz ohne Zwischenglühen durchgeführt wird, wobei das Walzen bei einer Temperatur zwischen Umgebungstemperatur und 200°C mit einem Reduktionsverhältnis zwischen 2 und 20% durchgeführt wird;
- und das gewalzte Flächenprodukt einem Glühvorgang in dem α oder α+β-Gebiet unterzogen wird, das zwischen 500 und 800°C zwischen 2 Minuten bis 10 Stunden durchgeführt wird.

2. Verfahren nach Anspruch 1, **dadurch gekennzeichnet, dass** seine Gewichtsanteile an Legierungselementen gegeben sind zu: Sn = 1,2-1,7%; Fe = 0,07 - 0,20%; Cr = 0,05 - 0,15%; Ni = 0,03 - 0,08%; O = 900 -1600 ppm.

3. Verfahren nach Anspruch 1, **dadurch gekennzeichnet, dass** seine Gewichtsanteile an Legierungselementen gegeben sind zu: Sn = 1,2 - 1,7%; Fe = 0,18 - 0,24%; Cr = 0,05 - 0,15%; O = 900 - 1600 ppm.

4. Verfahren nach Anspruch 1, **dadurch gekennzeichnet, dass** Sn = 0,5 - 2%; Nb = 0,5 - 2%; Fe = 0,1 - 0,5%.

5. Verfahren nach Anspruch 1, **dadurch gekennzeichnet, dass** Sn = 0,5 - 2%; Fe = 0,1 - 1%; Cr = 0,1 - 1,2%.

6. Verfahren nach Anspruch 1, **dadurch gekennzeichnet, dass** Nb = 1,5 - 3,5%; Sn = 0,5 - 2%.

7. Verfahren nach einem der Ansprüche 1 bis 6, **dadurch gekennzeichnet, dass** das Walzen gemäß der Härtung β bei einem Reduktionsverhältnisvon 5 bis 16% durchgeführt wird.

8. Verfahren nach Anspruch 7, **dadurch gekennzeichnet, dass** das der Härtung β folgende Walzen bei einem Reduktionsverhältnis von 5 bis 10% durchgeführt wird.

9. Flächenprodukt aus einer Zirkoniumlegierung, **dadurch gekennzeichnet, dass** es durch das Verfahren nach einem der Ansprüche 1 bis 8 hergestellt wird.

10. Element eines Brennelements für einen Leichtwasserreaktor eines Kernkraftwerks, **dadurch gekennzeichnet, dass** es durch Formgebung eines Flächenprodukts nach Anspruch 9 erhalten wird.

11. Element eines Brennelements für einen Leichtwasserreaktor eines Kernkraftwerks nach Anspruch 10, **dadurch gekennzeichnet, dass** es aus einem Kasten eines Siedewasserkernreaktors besteht.

12. Element eines Brennelements für einen Leichtwasserreaktor eines Kernkraftwerks nach Anspruch 10, **dadurch gekennzeichnet, dass** es aus einem Gitter eines Siedewasserreaktors besteht.

13. Element eines Brennelements für einen Leichtwasserreaktor eines Kernkraftwerks nach Anspruch 10, **dadurch gekennzeichnet, dass** es aus einem Gitter eines Druckwasserreaktors besteht.

14. Element eines Brennelements für einen Leichtwasserreaktor eines Kernkraftwerks nach Anspruch 10, **dadurch gekennzeichnet, dass** es aus einem zentralen Rohr, das die Zirkulationswege des Wassers begrenzt, besteht.

## Claims

1. A method of fabricating a flat product of zirconium alloy, the method being **characterized by**:
• preparing or casting a zirconium alloy ingot containing at least 95% by weight of zirconium, and including the usual impurities and alloying elements;
• shaping said ingot in order to obtain a flat product;
• subjecting said flat product to a β quenching operation, the cooling of the β quenching being performed at a speed of at least 1°C/s;
• subjecting said flat product, after the β quenching, to a rolling operation performed in a single rolling sequence without intermediate annealing, said rolling being performed at a temperature between the ambient temperature and 200°C, with a reduction ratio lying in the range 2% to 20%; and
• subjecting said rolled flat product to an annealing treatment in the α range or in the α + β range, performed in the temperature range 500°C to 800°C for 2 min to 10 h.

2. A method according to claim 1, **characterized in that** its alloy element contents by weight are: Sn = 1.2% - 1.7%; Fe = 0.07% - 0.20%; Cr = 0.05% - 0.15%; Ni = 0.03% - 0.08%; O = 900 ppm - 1600 ppm.

3. A method according to claim 1, **characterized in that** its alloy element contents by weight are: Sn = 1.2% - 1.7%; Fe = 0.18% - 0.24%; Cr = 0.05% - 0.15%; O = 900 ppm - 1600 ppm.

4. A method according to claim 1, **characterized in that** its alloy element contents by weight are: Sn = 0.5% - 2%; Nb = 0.5% - 2%; Fe = 0.1% - 0.5%.

5. A method according to claim 1, **characterized in that** its alloy element contents by weight are: Sn = 0.5% - 2%; Fe = 0.1% - 1%; Cr = 0.1% - 1.2%.

6. A method according to claim 1, **characterized in that** its alloy element contents by weight are: Nb = 1.5% - 3.5%; Sn = 0.5% - 2%.

7. A method according to any one of claims 1 to 6, **characterized in that** the rolling following the β quenching is performed with a reduction ratio of 5% to 16%.

8. A method according to claim 7, **characterized in that** the rolling following the β quenching is performed with a reduction ratio of 5% to 10%.

9. A zirconium alloy flat product, **characterized in that** it is obtained by the method according to any one of claims 1 to 8.

10. A fuel assembly element for a light water reactor for a nuclear power station, the element being **characterized in that** it is obtained by shaping a flat product according to claim 9.

11. A fuel assembly element for a nuclear power station reactor according to claim 10, **characterized in that** it consists in a box for a boiling water nuclear reactor.

12. A fuel assembly element for a nuclear power station reactor according to claim 10, **characterized in that** it consists in a grid for a boiling water reactor.

13. A fuel assembly element for a nuclear power station reactor according to claim 10, **characterized in that** it consists in a grid for a pressurized water reactor.

14. A fuel assembly element for a nuclear power station reactor according to claim 10, **characterized in that** it consists in a central tube defining water circulation paths.
